# EUROPEAN PATENT SPECIFICATION

(11) **EP 2 515 001 B1**
(45) Date of publication and mention of the grant of the patent: **06.07.2016**
(21) Application number: 10805569.0
(22) Date of filing: 29.10.2010
(51) Int. Cl.: F16H 25/24, F16H 57/04

(54) **BALL SCREW**
KUGELSCHRAUBE
VIS À BILLES

(30) Priority: 17.12.2009 JP 2009286242; 18.02.2010 JP 2010033682; 10.06.2010 JP 2010132929; 27.08.2010 JP 2010190656; 27.08.2010 JP 2010190657; 27.08.2010 JP 2010190658; 27.08.2010 JP 2010190659
(43) Date of publication of application: 24.10.2012
(73) Proprietor: NSK Ltd., Tokyo 141-8560 (JP)
(72) Inventor: OHKUBO, Tsutomu, Maebashi-shi Gunma 371-8527 (JP); YAMAMOTO, Kazuhito, Maebashi-shi Gunma 371-8527 (JP)
(74) Representative: Klingseisen, Franz
(86) International application number: PCT/JP2010/006421
(87) International publication number: WO 2011/074170

(56) References cited:
- JP-A- 1 035 166
- JP-A- 9 264 324
- JP-A- 11 118 017
- JP-A- 2008 057 576
- JP-U- H02 116 055
- US-A- 4 955 244

## Description

The invention relates to a ball screw according to the preamble of claim 1.

Such a ball screw is known from JP H02116055 U wherein a hood is provided at each of the axial ends of the nut and a female screw radially penetrates the nut at the axial center of the nut.

JP 64035166 A discloses a ball screw wherein covers are arranged at both axial ends of the nut and a hole radially penetrates the nut at the axial center of the nut.

The presence of dust in environment where semiconductors and crystal display panels are manufactured will be a cause of lowering yield of these precision equipments. Thus, these equipments has always been manufactured in clean environment such as a clean room. Therefore, ball screws constituting devices (e.g., a manufacturing equipment and a carrier device) used for manufacture of the semiconductor devices and crustal display panels has been demanded not to produce the dust in an operating state.

Patent Document 1 discloses that where a ball return channel of a ball screw has structure of causing a ball to be collided against a tongue of a recirculating tube to scoop up the ball outside the nut, oil of grease adhered to the ball etc., is scattered in collision and given off outside as minute particles from between a screw shaft and a nut, which comes to a cause of dust emission. To eliminate the cause, Patent Document 1 discloses connecting the ball return channel of the ball screw by a through hole (i.e., the ball return channel) extending in an axial direction of the nut, and a ball recirculating internal-deflector communicated therewith, and has the ball recirculating internal-deflector of allowing recirculation of the ball in a state where the ball is liberated from collision against the tongue.

Further, the ball screw disclosed in Patent Document 1 is lubricated by low-dust emission grease and an annular groove is sealed with a ring-shaped contact seal disposed to the axial both sides of the nut.

Patent Document 2 discloses connecting a suction pipe to an oil supply hole provided on the nut of the ball screw, and sucking and removing dust produced inside the nut. By applying grease plating (i.e., a method of forming film lubricant by dipping the ball screw into lubricant-contained solution and after that drying it) to the nut screw, to suppress dust emission from the lubricant.

### Prior Art Documents

### Patent Documents

Patent Document 1: JP laid-open Patent Application Publication No. Hei 2006-112517 A
Patent Document 2: JP Patent No. 2638955 B

### Summary of the invention

### Problem to be Solved

In the ball screw disclosed in Patent Documents 1 and 2, however, there is still a room for improvement of dust reduction effect.

An object of the present invention is to attain the dust reduction effect higher than the conventional ball screw, such that the dust produced inside the nut does not escape outside.

The solution to the problem is defined by the characterizing part of claim 1.

To solve the above problem, a ball screw according to a fifth aspect which constitutes the present invention includes a nut on an inner peripheral surface of which a spiral groove is formed; a screw shaft on an outer peripheral surface of which a spiral groove is formed; a ball disposed between a raceway formed by the spiral groove of the nut and the spiral groove of the screw shaft; and a ball return channel returning back the ball from a starting point to an end point of the raceway, wherein the nut relatively travels along the screw shaft by rolling the ball in the channel, a plurality of ring-shaped non-contact seals are respectively disposed at a predetermined space at both axial ends of the nut, a suction mechanism is provided for sucking air within the space, and a suction hole of the suction mechanism is formed in the nut.

In the ball screw according to a fifth aspect, the suction mechanism includes a vent hole formed axially penetratingly in the nut, and a through hole communicating the vent hole with the space is formed in an inside seal disposed at the innermost of each end of the nut, wherein the suction hole axially extends from an external surface of the nut to the vent hole and is disposed at a position between the inside seals in an axial direction of the nut.

The ball screw according to the fifth aspect may have a structure in which the ball return channel is formed within the nut.

The ball screw according to the fifth aspect may have a structure in which the grease supply hole supplying lubricant within the nut is formed in the nut and the suction hole is formed at a position different from the position of the grease supply hole.

### Operation of the Invention

A source of the dust of the ball screw is exclusively in the lubricant emission and the dust is produced by scattering the lubricant when the balls roll along the raceway. Since the lubricant is also adhered to a portion outside the nut of the ball screw but the ball does not exist in the raceway of that portion, less dust is emitted from that portion even when the screw shaft is rolling. Namely, in the balls screw, the dust is produced exclusively within the range of the raceway (the range within which the ball rolls) inside the nut.

In the ball screw according to the fifth aspect, since the pathway through which the dust within the nut migrates to the outside is restricted to the axial both ends of the nut and a plurality of non-contact seals are respectively arranged at the axial both ends of the nut via a predetermined space, the dust comes to be collected not only within the range of the raceway of the inside of the nut but also in the space surrounded by the adjoining non-contact seals.

Sucking the air collected within a space with the suction mechanism removes the dust within the space. While the dust is being sucked with the suction mechanism, air existing in the outside intrudes into the space through the gap between the non-contact seals and the screw shaft, thereby preventing the air from flowing toward outside via the gap between the non-contact seal and the screw shaft.

In addition, the suction introduces the air existing within the range of the raceway inside of the nut through the gap between the non-contact seal and the screw shaft. Thus, the dust both existing both within the range of the raceway inside the nut and gathered in the space are sucked and removed, which effectively removes the dust inside the whole nut. Further, arranging the non-contact seal prevents the dust due to contact between the screw shaft and the seal.

Preferably, in the ball screw according to the fifth aspect, the ball return channel is provided within the nut. This facilitates that the pathway through which the dust inside the nut exits outside is restricted to the axial both ends (existing only at the axial both ends) of the nut. In this connection, where the ball return channel is made from a recirculating tube, filling up a hole into which the recirculating tube is inserted and a gap between the hole and a leg of the recirculating tube inserted into the hole allows restricting the channel through which the dust within the nut exits outside to the axial both ends of the nut.

The suction mechanism of the ball screw according to the fifth aspect includes the vent hole axially formed in the nut penetratingly, the through hole communicating the vent hole provided in the inside seal arranged in the innermost of each end of the nut with the space, wherein the through hole radially extends from the outside of the nut up to the vent hole, and is disposed at the position between the inside seals in an axial direction of the nut.

Thereby, sucking from the suction hole intrudes air in the space sandwiched by the adjoining non-contact seals at the axial both ends of the nut into the vent hole from the through hole of the inside seals, at the axial both ends of the nut, which effectively removes the dust within the nut from the axial both ends. Further, the suction hole radially extends from the exterior of the nut up to the vent hole and it does not open to the interior. Hence, the suction hole is hard to be stopped up with the lubricant and the lubricant is hard to be discharged from the suction hole.

In the ball screw according to the fifth aspect, the formation of the grease supply hole supplying the lubricant inside the nut and of the suction hole at the position different from the grease supply hole enables supplying lubricant the from the grease supply hole to the inside of the nut to lubricate the ball screw. That is so say, taking this structure allows sucking and removing of almost all the dust produced, within the nut without migrating to the outside, while continuing lubrication of the ball screw by supplying the lubricant inside the nut.

Preferably, the ball screw combines a shape of the inner circumference of the non-contact seal and that of the spiral groove of the screw shaft such that an annular gap formed by the screw shaft and the non-contact seals is nearly equal over a radial direction. For example, the spiral groove of the screw shaft is a simple gothic arc profile devoid of grinding clearance and the inner circumference of the non-contact seal is a shape formed correspondingly thereto. This evenly introduces in suction air from an entire circumference direction of the annular gap into the nut, which improves suction efficiency because of even air flow over the length in the circumference direction. It is desirable for annular groove formed by the screw shaft and the non-contact seal to be less than 0.5 mm.

As a candidate of the lubricant, it is desirable to use low-dust emission grease of which consistency is less than 300.

After supply of the lubricant inside the nut and trial run, interposing the lubricant between the gap between the non-contact seal and the screw shaft creates a tiny gap between the screw shaft and the non-contact seal. Consequently, the use of the ball screw of the present invention enhances the suction efficiency after the trial run.

### Advantageous Effect of the Invention

According to the ball screw of the present invention, the invention prevents the most of dust produced inside the nut from migrating to the outside, thereby achieving effective suction and removal of the dust. This exerts a dust reduction effect higher than that of the conventional ball screw.

### Brief Description of the Drawings

FIG. 1 is a sectional view showing a ball screw of the embodiment 1-1;
FIG. 2 is a sectional view showing a ball screw of the embodiment 1-2';
FIG. 3 is a sectional view showing a ball screw of the embodiment 1-3;
FIG. 4 is a front view showing a ball screw of the embodiment 1-4;
FIG. 5 is a sectional view (a sectional view taken along the line A-A in FIG. 4) showing a ball screw disclosed in an embodiment 1-4;
FIG. 6 is a sectional view showing a ball screw of the embodiment 2-1;
FIG. 7 is a sectional view showing a ball screw of the embodiment 2-2;
FIG. 8 is a sectional view showing a ball screw of the embodiment 2-3;
FIG. 9 is a sectional view showing a ball screw of the embodiment 3-1;
FIG. 10 is a sectional view showing a ball screw of the an embodiment 3-2;
FIG. 11 is a sectional view showing a ball screw of the embodiment 3-3;
FIG. 12 is a partially cut away front view showing a ball screw of the embodiment 4-1;
FIG. 13 is a sectional view taken along the line A-A in FIG. 12.
FIG. 14 is a sectional view taken along the line B-B in FIG. 12.
FIG. 15 is a sectional view taken along the line B-B of a nut configuring a ball screw in FIG. 12;
FIG. 16 is a partially cut away front view showing a ball screw of the embodiment 4-2;
FIG. 17 is a sectional view taken along the line A-A in FIG. 16; and
FIG. 18 is a partially cut away front view showing a ball screw of the embodiment 4-3.

### First Embodiment (not claimed)

The first embodiment corresponds to embodiments of a ball screw of a first aspect and a ball screw of a second aspect.

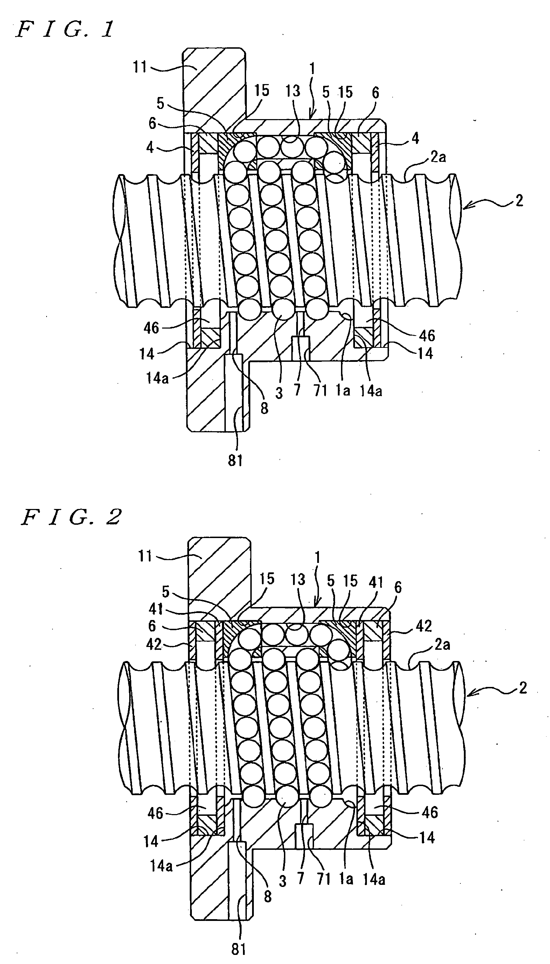

FIG. 1 is a sectional view showing the ball screw of the embodiment 1-1.

As shown in FIG. 1, the ball screw is composed of a nut 1, a screw shaft 2, balls 3, a ring-shaped non-contact seal 4, an end deflector 5, and an annular spacer 6. A spiral groove 1a is formed on an inner peripheral surface of the nut 1 and a spiral groove 2a is formed on an outer peripheral surface of the screw shaft 2. The balls 3 are disposed between a raceway formed by the spiral groove 1a of the nut 1 and the spiral groove 2a of the screw shaft 2. A flange 11 is formed at one axial end of the nut 1.

An axially extending through hole 13 is formed in the nut 1. A concave 15 for disposing the end deflector 5 is formed at the both ends of the through hole 13 of the nut 1. Namely, a return channel of the ball screw is formed inside the nut 1 by the ball return channel formed of a through hole 13 and the end deflector 5 connected to the both ends thereof. The end deflector 5 is adopted a tangential-line scooping-up configuration.

A concave 14 for mounting the spacer 6 and the non-contact seal 4 is formed at the axial both ends of the nut 1. The spacer 6 and the non-contact seal 4 are disposed in the concave 14 of the nut 1 in order from the axial inside. There are fixed to an end face 14a of the concave 14 with a bolt (not shown). This creates a space 46 surrounded by the non-contact seal 4, the spacer 6, and the screw shaft 2 at the axial both ends of the nut 1. These spaces 46 serve as a grease (lubricant) pool space. The spacer 6 may be integrally formed with the nut 1.

A suction hole 7 for connecting to a suction section and a grease supply hole 8 for supplying lubricant inside thereof are further formed in the nut 1. The suction hole 7 is formed as a radially penetrating through hole at a position between the adjoining spiral grooves 1a at the axial center of the nut 1. That is, the suction hole 7 is formed within the range of a raceway formed by the spiral groove 1a of the nut 1 and the spiral groove 2a of the screw shaft 2. An outer circumference side of the nut of the suction hole 7 is diametrically expanded to form a fitting hole 71 into which a tip of the suction pipe is inserted for fitting thereof.

The grease supply hole 8 is formed as a radially penetrating through hole at a position between the adjoining spiral grooves 1a of a portion where the flange 11 of the nut 1 is provided. The outer circumference side (all the portions where the flange 11 is disposed) of the nut of the grease supply hole 8 is diametrically expanded to form a fitting hole 81 into which a tip of the suction pipe is inserted for fitting thereof.

A cross section of the spiral groove 2a of the screw shaft 2 is a simple gothic arc profile where a grinding release port is not formed. In correspondence therewith, a shape of an inner circumference of the non-contact seal 4 is configured so that an annular gap formed by the screw shaft 2 and the non-contact seal 4 is nearly identical with each other over a circumferential direction.

The ball screw is utilized e.g. in the following procedure.

A tip of the grease supply pipe of the low-emission dust grease of which consistency is less than 300 is fitted to the fitting hole 81 of the grease supply hole 8 of the nut 1, and a tip of the suction pipe is fitted to the fitting hole 71 of the suction hole 7 of the nut 1. Then, the low-emission grease as much as of 1/4 of an inner space is supplied first from the grease supply hole 8 to the inside of the nut 1 to collect the grease within the grease pool space 46.

Next, as a trial run, relatively travelling several times the nut 1 in a stroke corresponding to the length of the nut 1 with respect to the screw shaft 2 migrates the grease within the grease pool space 46, thereby interposing the grease between the non-contact seal 4 and the screw shaft 2. This creates a tiny annular gap (equal to or less than 0.5mm) between the non-contact seal 4 and the screw shaft 2.

Subsequently, a suction source of the suction pipe is actuated to suck the inside of the nut 1 and an operation of the ball screw is started in this state. The dust produced within the nut 1 is sucked and removed from the suction hole 7 by rolling the balls 3. External air enters into the inside of the nut 1 through the tiny gap between the non-contact seal 4 and the screw shaft 2, which prevents the air in the inside of the nut 1 from moving toward the outside through the gap between the non-contact seal 4 and the screw shaft 2.

In this way, the dust produced inside the nut 1 is effectively sucked and removed. The provision of the grease pool space 46 forms the tiny annular gap between the non-contact seal 4 and the screw shaft 2, promising specifically high suction efficiency. Also, the use of the non-contact seal 4 conduces to prevention of dust emission caused by contact with the screw shaft 2.

Thus, according to the ball screw of this embodiment, the almost all the dust produced inside the nut is removed, without going toward the outside, while lubricating the ball screw by supplying lubricant to the inside of the nut. This exerts dust reduction effect higher than that of the conventional ball screw.

Note that it could be expected that the grease existing inside of the nut 1 would invade from the suction hole 7 to the suction pipe for long-term use. Even in that event, when one takes the measure of providing in the suction pipe a part to pool the grease and the grease is periodically expelling the grease from the part, in that situation, it is feasible to guarantee not to degrade the suction efficiency, even for the long-term use.

FIG. 2 is a cross sectional view showing the ball screw of the embodiment 1-2.

In this embodiment, two non-contact seals 41 and 42 are attached to the concave 14 of the axial both ends of the nut 1 respectively through a spacer 6. The grease pool space 46 is formed between the non-contact seals 41 and 42.

Other than the above, the embodiment 1-2 is the same as the embodiment 1-1.

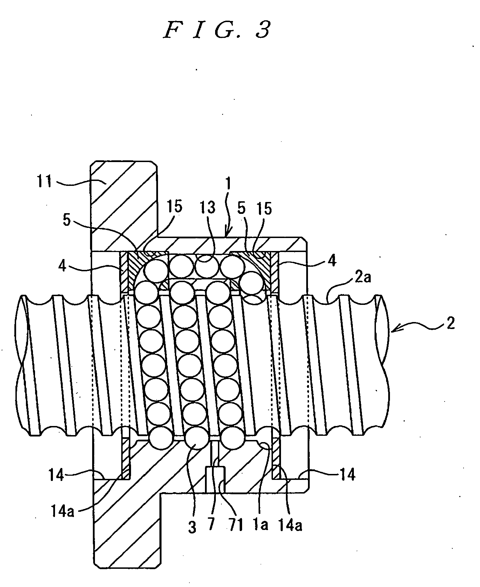

FIG. 3 is a sectional view showing the ball screw of the embodiment 1-3.

In the embodiments 1-1 and 1-2, the grease supply hole 8 is formed at the position different from the suction hole 7 of the nut 1, and the grease is supplied from the grease supply hole 8. Unlike this, in the third embodiment, the nut 1 is devoid of the grease supply hole 8 and lubrication is done by applying grease plating to the screw shaft 2. This keeps a gap between the non-contact seal 4 and the screw shaft 2 of the ball screw shown in FIG. 3 almost constant, and avoids invasion of the grease into the suction hole 7.

Contrarily, in the ball screw shown in FIGS. 1 and 2, it could not say no possibility that the grease supplied from the grease supply hole 8 might intrude into the suction hole 7. In some instances, once the grease intrudes into the suction hole 7, the ball screw can suffer from decreased suction effect. Consequently, the ball screw shown in FIG. 3 may exert dust reduction effect higher than that of the ball screw shown in FIGS. 1 and 2.

In place of applying the grease plating to the screw shaft 2, the same effect as the above may be achieved by forming a film made of solid lubricant on a surface of the screw shaft 2. The solid lubricant for forming thereon the film includes at least one of molybdenum disulfide, organo molybdenum compounds, soft metal (e.g., gold, silver, and lead), and polymer materials (e.g., PTFE, polyimide).

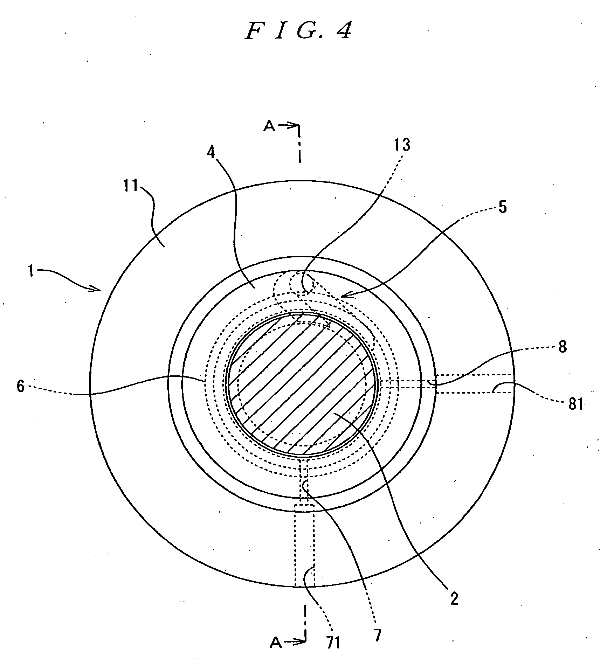

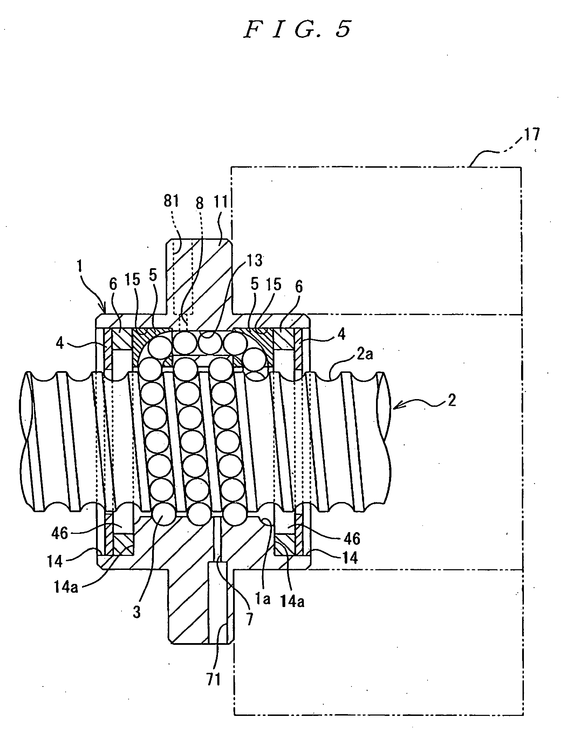

FIGS. 4 and 5 are front and sectional views showing the ball screw of the embodiment 1-4.

In the embodiments 1-1 to 1-3, the grease supply hole 8 is formed in the flange 11 provided at axial one end of the nut 1 and the suction hole 7 is formed at a portion other than the flange 11. In the fourth embodiment, the flange 11 is provided at the axial center of the nut 1 at which the suction hole 7 and the grease supply hole 8 are formed. As shown in FIG. 4, the suction hole 7 and the grease supply hole 8 are formed at a position of which phase is shifted by 90°. The structure other than the above is the same as those shown in FIG. 1.

In this manner, when housing 17 is fit onto the portion other than the flange 11 of the nut 1 and an end face of the housing 17 is mounted in contact with an end face of the flange 11, forming the suction hole 11 in the flange 11 forecloses the fitting hole 71 of the suction hole 7 from being hidden with the housing 17. This facilitates the mounting of the suction pipe to the fitting hole 71 of the suction hole 7. On the contrary, where the suction hole 7 is formed at the portion other than the flange 11, the above mounting scheme comes to hide the fitting hole 71 of the suction hole 7 with the housing 1.. Hence, it ought to form in the housing a through hole via which the fitting hole 71 of the suction hole 7 and the suction pipe are connected to each other.

Whereas in these embodiments, the suction hole 7 is formed at the position between the adjoining spiral grooves 1a at the axial center of the nut 1, the suction hole 7 may alternatively be formed at a position of the spiral groove 1a.

Understandingly, the embodiment is also applicable to a ball screw with a plurality of recirculating cycles (ball return channel + raceway). On this occasion, the suction hole radially penetrating the nut may be formed at a corresponding position between the adjoining recirculating cycles.

Further, while the ball screw in these embodiments includes the ball return channel formed of the through hole 13 and the ball return channel made of the end deflector 5, the embodiment may also be applied to a ball screw of which ball return channel is the end-cap system, the recirculating tube system, and the internal-deflector system.

### Second Embodiment (not claimed)

The second embodiment corresponds to the embodiment of the ball screw of the first aspect and the ball screw of the third aspect.

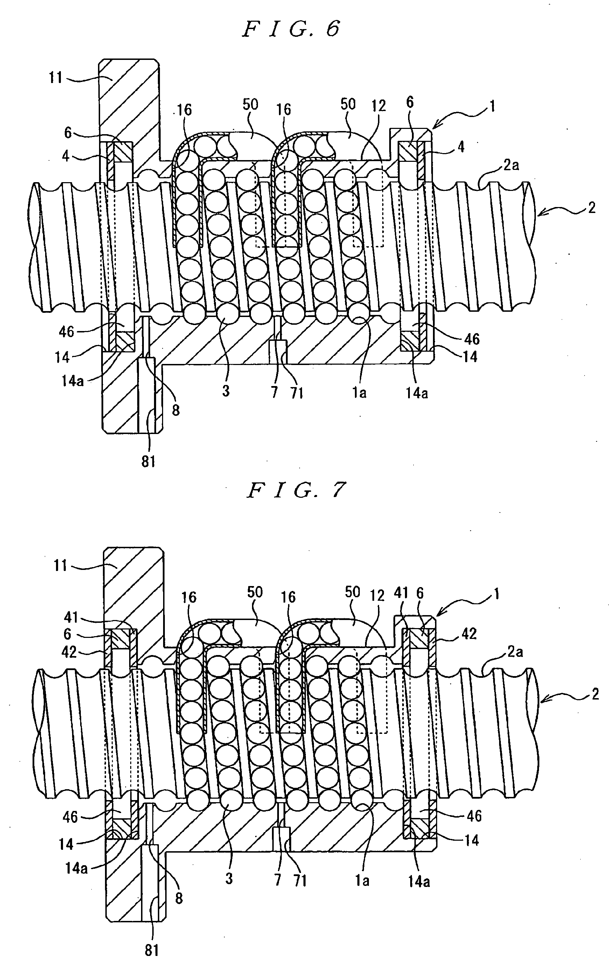

FIG. 6 is a sectional view showing the ball screw of the embodiment 2-1.

As shown in FIG. 6, the ball screw is composed of the nut 1, the ball screw 2, the balls 3, the ring-shaped non-contact seal 4, the recirculating tube 50, and the annular spacer 6. The spiral groove 1a is formed on the inner peripheral surface of the nut 1 and the spirale groove 2a is formed on the outer peripheral surface of the screw shaft 2. The balls 3 are disposed between the raceway formed by the spiral groove 1a of the nut 1 and the spiral groove 2a of the screw shaft 2. Moreover, the flange 11 is provided at one axial end of the nut 1.

The ball screw has two recirculating cycles composed of the raceway of the ball 3 (a rolling channel formed by the spiral groove 1a of the nut 1 and the spiral groove 2a of the screw shaft 2) and the recirculating tube 50.

A plane 12 is provided on the outer circumference of the portion other than the flange 11 of the nut 1 for disposing the two recirculating tubes 50. A tube fitting hole 16 for fitting the two recirculating tubes 50 is formed on the plane 12. A leg of the recirculating tube 50 is inserted into the tube fitting hole 16. Furthermore, the recirculating tube 50 is fixed to the nut 1 with a tube clamp (not shown).

Further, a gap between the tube fitting hole 16 and the leg of the recirculating tube 50 is sealed with sealant. Thereby, the ball screw shown in FIG. 6 has structure (existing only at the axial both ends of the nut 1) in which the pathway through which dust produced inside of the nut 1 exits the outside is restricted to the axial both ends of the nut 1.

The concave 14 for mounting the spacer 6 and the non-contact seal 4 is formed at the axial both ends of the nut 1. The spacer 6 and the non-contact seal 4 are disposed in the concave 14 of the nut 1 in order from the axial inside. There are fixed to the end face 14a of the concave 14 with the bolt (not shown). This creates the space 46 surrounded by the non-contact seal 4, the spacer 6, and the screw shaft 2 at the axial both ends of the nut 1. These space 46 serve as the grease (lubricant) pool space. The spacer 6 may be integrally formed with the nut 1.

The suction hole 7 to which the suction section is connected and the grease supply hole 8 for supplying inside lubricant are formed in the nut 1. The suction hole 7 is formed at a position between the adjoining spiral grooves 1a at the axial center of the nut 1 as a radially penetrating through hole. The position at which the suction hole 7 is formed is a position of boundary of the two circulating cycles. The outer circumference side of the nut of the suction hole 7 is diametrically expanded to form the fitting hole 71 into which a tip of the suction pipe is inserted for fitting.

The grease supply hole 8 is formed as a radially penetrating through hole at a position between the adjoining spiral grooves 1a of a portion where the flange 11 of the nut 1 is provided. The outer circumference side (all the portions where the flange 11 is disposed) of the nut of the grease supply hole 8 is diametrically expanded to form a fitting hole 81 into which a tip of the suction pipe is inserted for fitting thereof.

A cross section of the spiral groove 2a of the screw shaft 2 is a simple gothic arc profile where a grinding release groove is not formed. In correspondence therewith, a shape of an inner circumference of the non-contact seal 4 is configured so that an annular gap formed by the screw shaft 2 and the non-contact seal 4 is nearly identical with each other over a circumferential direction.

The ball screw is utilized e.g. in the following procedure.

A tip of the grease supply pipe of the low-emission dust grease of which consistency is less than 300 is fitted to the fitting hole 81 of the grease supply hole 8 of the nut 1, and a tip of the suction pipe is fitted to the fitting hole 71 of the suction hole 7 of the nut 1. Then, the low-emission grease as much as of 1/4 of an inner space is supplied first from the grease supply hole 8 to the inside of the nut 1 to collect the grease within the grease pool space 46.

Next, as a trial run, relatively travelling several times the nut 1 in a stroke corresponding to the length of the nut 1 with respect to the screw shaft 2 migrates the grease within the grease pool space 46, thereby interposing the grease between the non-contact seal 4 and the screw shaft 2. This creates a tiny annular gap (equal to or less than 0.5mm) between the non-contact seal 4 and the screw shaft 2.

Subsequently, a suction source of the suction pipe is actuated to suck the inside of the nut 1 and an operation of the ball screw is started in this state. The dust produced within the nut 1 is sucked and removed from the suction hole 7 by rolling the balls 3. External air enters into the inside of the nut 1 through the tiny gap between the non-contact seal 4 and the screw shaft 2, which prevents the air in the inside of the nut 1 from moving toward the outside through the gap between the non-contact seal 4 and the screw shaft 2.

In this way, the dust produced inside the nut 1 is effectively sucked and removed. The provision of the grease pool space 46 forms the tiny annular gap between the non-contact seal 4 and the screw shaft 2, promising specifically high suction efficiency. Also, the use of the non-contact seal 4 conduces to prevention of dust emission caused by contact with the screw shaft 2.

Thus, according to the ball screw of the embodiment, the almost all the dust produced inside of the nut is removed, without going toward the outside, while continuing lubrication of the ball screw by supplying lubricant inside the nut. This exerts a dust emission reduction effect higher than that of the conventional ball screw.

Note that it could be prospected that the grease inside of the nut 1 would migrate from the suction hole 7 to the suction pipe due to a prolonged period of time. Even in this case, providing a section to pool the grease in the suction pipe and periodically expelling the grease from the section maintains the suction efficiency, without dropping it, even for the prolonged period of time.

FIG. 7 is a cross sectional view showing the ball screw of the embodiment 2-2.

In this embodiment, two non-contact seals 41 and 42 are attached to the concave 14 of the axial both ends of the nut 1 respectively through a spacer 6. The grease pool space 46 is formed between the non-contact seals 41 and 42.

Other than the above, the embodiment 2-2 is the same as the embodiment 2-1.

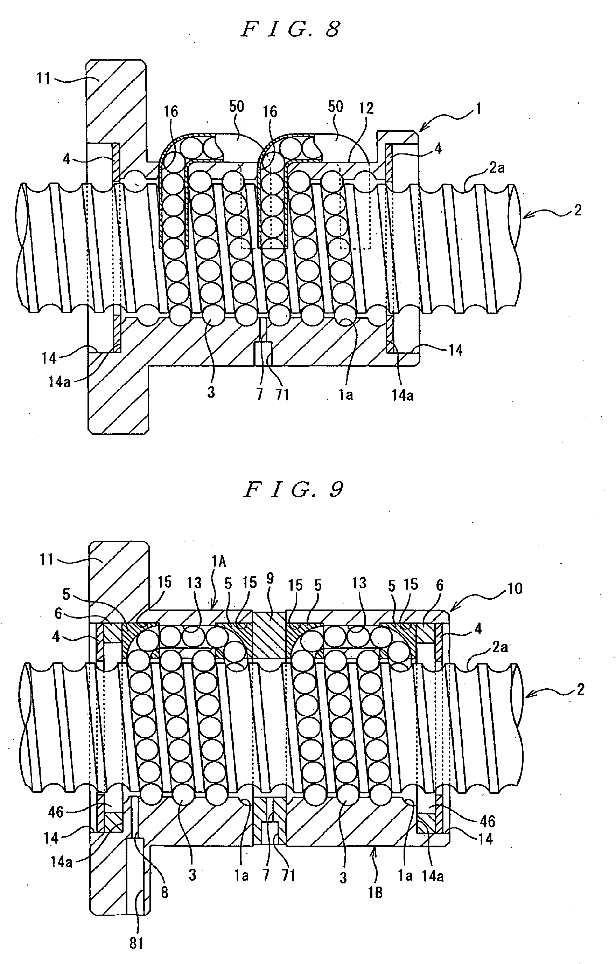

FIG. 8 is a sectional view showing the ball screw of the embodiment 2-3.

In the embodiments 2-1 and 2-2, the grease supply hole 8 is formed at the position different from the suction hole 7 of the nut 1, and the grease is supplied from the grease supply hole 8. Unlike this, in the third embodiment, the nut 1 is devoid of the grease supply hole 8 and lubrication is done by applying grease plating to the screw shaft 2. This keeps a gap between the non-contact seal 4 and the screw shaft 2 of the ball screw shown in FIG. 8 almost constant, and avoids invasion of the grease into the suction hole 7.

Contrarily, in the ball screw shown in FIGS. 6 and 7, it could not say no possibility that the grease supplied from the grease supply hole 8 might intrude into the suction hole 7. In some instances, once the grease intrudes into the suction hole 7, the ball screw can suffer from decreased suction effect. Consequently, the ball screw shown in FIG. 8 may exert dust reduction effect higher than that of the ball screw shown in FIGS. 6 and 7.

In place of applying the grease plating to the screw shaft 2, the same effect as the above may be achieved by forming a film made of solid lubricant on a surface of the screw shaft 2. The solid lubricant for forming thereon the film includes at least one of molybdenum disulfide, organo molybdenum compounds, soft metal (e.g., gold, silver, and lead), and polymer materials (e.g., PTFE, polyimide).

Whereas in these embodiments, the suction hole 7 is formed at the position between the adjoining spiral grooves 1a at the axial center of the nut 1, the suction hole 7 may alternatively be formed at a position of the spiral groove 1a.

Further, while the ball screw in these embodiments utilizes the recirculating tube 50 as the ball return channel, the ball return channel may be formed by the through hole (ball return channel) that is axially extending and formed in the nut and the end deflector instead thereof. Furthermore, the embodiment may also be applied to a ball screw on which ball return channel is the end-cap system or the internal-deflector system.

### Third Embodiment (not claimed)

The third embodiment corresponds to the embodiment of the ball screw of the first aspect and the ball screw of the fourth aspect.

FIG. 9 is a sectional view showing the ball screw of the embodiment 3-1.

As shown in FIG. 9, the ball screw is composed of the double nut 10, the screw shaft 2, the balls 3, the ring-shaped non-contact seal 4, the end deflector 5, and the annular spacer 6. The double nut 10 is connected by combining a first nut 1A and a second nut 1B via the spacer 9 made of annulus.

The flange 11 is provided at one axial end of the first nut 1A but it is not provided at the second nut 1B. The spiral groove 1a is formed on the inner peripheral surface of the both nuts 1A and 1B and the spiral groove 2a is formed on the outer peripheral surface of the screw shaft 2. The balls 2 are disposed between the raceway formed by the spiral groove 1a of the both nuts 1A and 1B and the spiral groove 2a of the screw shaft 2.

An axially extending through hole 13 is formed in the both nuts 1A and 1B. A concave 15 for arranging the end deflector 5 is formed at the both ends of the through hole 13 of the both nuts 1A and 1B. That is, the two ball return channels of the ball screw are formed inside of the both nuts 1A and 1b by the ball return channel formed of the through hole 13 and the end deflector connected to the both ends thereof. The end deflector 5 is adopted a tangential line scooping-up form

The concave 14 for mounting the spacer 6 and the non-contact seal 4 is formed at the axial both ends of the double nut 10. The spacer 6 and the non-contact seal 4 are disposed in the concave 14 of the double nut 10 in order from the axial inside. There are fixed to an end face 14a of the concave 14 with a bolt (not shown). This creates a space 46 surrounded by the non-contact seal 4, the spacer 6, and the screw shaft 2 at the axial both ends of the double nut 1.

A suction hole 7 to connecting to the suction section in the spacer 9 of the double nut 10. The suction hole 7 is formed as a radially penetrating through hole of an annulus constituting the spacer 9 at a position at the axial center of the double nut 10. An external circumference side of the spacer 9 of the suction hole 7 is diametrically expanded to form a fitting hole 71 into which a tip of the suction pipe is inserted for fitting thereof.

The grease supply hole 8 is formed as a radially penetrating through hole at a position between the adjoining spiral grooves 1a of a portion where the flange 11 of the nut 1A is provided. The outer circumference side (all the portions where the flange 11 is disposed) of the nut of the grease supply hole 8 is diametrically expanded to form a fitting hole 81 into which a tip of the suction pipe is inserted for fitting thereof.

A cross section of the spiral groove 2a of the screw shaft 2 is a simple gothic arc profile where a grinding release port is not formed. In correspondence therewith, a shape of an inner circumference of the non-contact seal 4 is configured so that an annular gap formed by the screw shaft 2 and the non-contact seal 4 is nearly identical with each other over a circumferential direction.

The ball screw is utilized e.g. in the following procedure.

A tip of the grease supply pipe of the low-emission dust grease of which consistency is less than 300 is fitted to the fitting hole 81 of the grease supply hole 8 of the nut 1A, and a tip of the suction pipe is fitted to the fitting hole 71 of the suction hole 7 of the nut 1A. Then, the low-emission grease as much as of 1/4 of an inner space is supplied first from the grease supply hole 8 to the inside of the nut 1A to collect the grease within the grease pool space 46.

Next, as trial run, relatively travelling several times the nut 1A in a stroke corresponding to the length of the double nut 10 with respect to the screw shaft 2 migrates the grease within the grease pool space 46, thereby interposing the grease between the non-contact seal 4 and the screw shaft 2. This creates a tiny annular gap (equal to or less than 0.5mm) between the non-contact seal 4 and the screw shaft 2.

Subsequently, a suction source of the suction pipe is actuated to suck the inside of the double nut 1 and an operation of the ball screw is started in this state. The dust produced within the both nuts 1A and 1B is migrated to between the spacer 9 and the screw shaft 2 and sucked and removed from the suction hole 7 by rolling the balls 3. External air enters into the inside of the both nuts 1A and 1B through the tiny gap between the non-contact seal 4 and the screw shaft 2, which prevents the air in the inside of both nuts 1A and 1B from moving toward the outside through the gap between the non-contact seal 4 and the screw shaft 2.

In this way, the dust produced inside the double nut 1 is effectively sucked and removed. The provision of the grease pool space 46 forms the tiny annular gap between the non-contact seal 4 and the screw shaft 2, promising specifically high suction efficiency. Also, the use of the non-contact seal 4 conduces to prevention of dust emission caused by contact with the screw shaft 2.

Thus, according to the ball screw of this embodiment, the almost all the dust produced inside the double nut is removed, without going toward the outside, while lubricating the ball screw by supplying lubricant to the inside of the double nut. This exerts dust reduction effect higher than that of the conventional ball screw.

Note that it could be expected that the grease existing inside of the double nut 1 would invade from the suction hole 7 to the suction pipe for long-term use. Even in that event, when one takes the measure of providing in the suction pipe a part to pool the grease and the grease is periodically expelling the grease from the part, in that situation, it is feasible to guarantee not to degrade the suction efficiency, even for the long-term use.

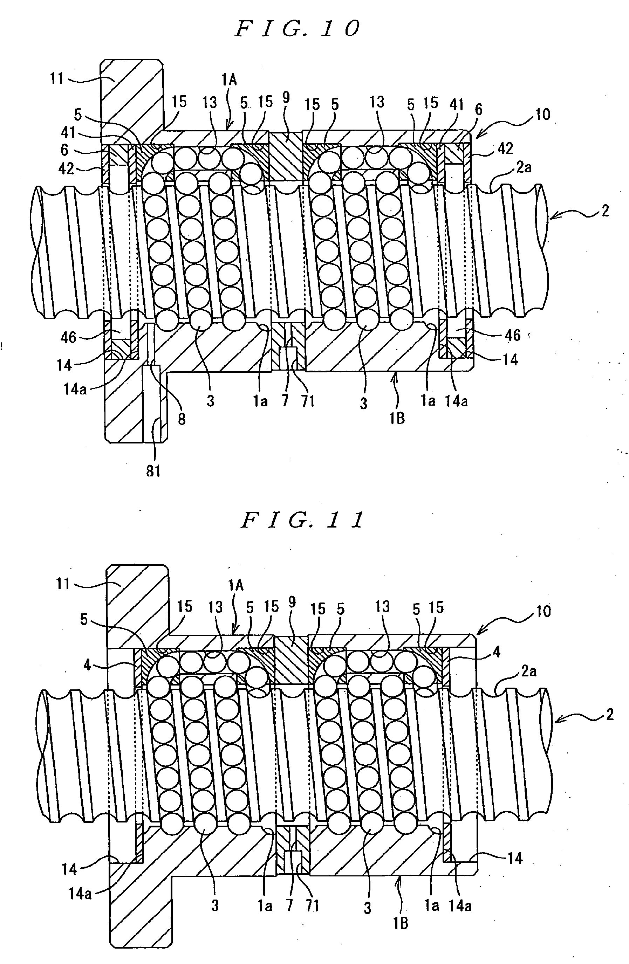

FIG. 10 is a sectional view showing the ball screw disclosed in the embodiment 3-2.

In this embodiment, tow non-contact seals 41 and 42 are attached to the concave 14 of the axial both ends of the double nut 10 through the spacer 6. This creates the grease pool space 46 is formed between the non-contact seals 41 and 42. Other than the above, the ball screw of the embodiment 3-2 is the same as that of the embodiment 3-1.

FIG. 11 is a sectional view showing the ball screw of the embodiment 3-3.

In the embodiments 3-1 and 3-2, the grease supply hole 8 is formed at the flange 11 of the first nut 1A, and the grease is supplied from the grease supply hole 8. Unlike this, in the embodiment 3-3, the nut 1A is devoid of the grease supply hole 8 and lubrication is done by applying grease plating to the screw shaft 2. This keeps a gap between the non-contact seal 4 and the screw shaft 2 of the ball screw shown in FIG. 11 almost constant, and avoids invasion of the grease into the suction hole 7..

Contrarily, in the ball screw shown in FIGS. 9 and 10, it could not say no possibility that the grease supplied from the grease supply hole 8 might intrude into the suction hole 7. In some instances, once the grease intrudes into the suction hole 7, the ball screw can suffer from decreased suction effect. Consequently, the ball screw shown in FIG. 11 may exert dust reduction effect higher than that of the ball screw shown in FIGS. 9 and 10.

In place of applying the grease plating to the screw shaft 2, the same effect as the above may be achieved by forming a film made of solid lubricant on a surface of the screw shaft 2. The solid lubricant for forming thereon the film includes at least one of molybdenum disulfide, organo molybdenum compounds, soft metal (e.g., gold, silver, and lead), and polymer materials (e.g., PTFE, polyimide). Further, while the ball screw in these embodiments includes the ball return channel formed of the through hole 13 and the ball return channel made of the end deflector 5, the embodiment may also be applied to a ball screw of which ball return channel is the end-cap system, the recirculating tube system, and the internal-deflector system.

### Fourth Embodiment (claimed)

The fourth embodiment corresponds to the embodiment of the ball screw of a fifth aspect which constitutes the present invention.

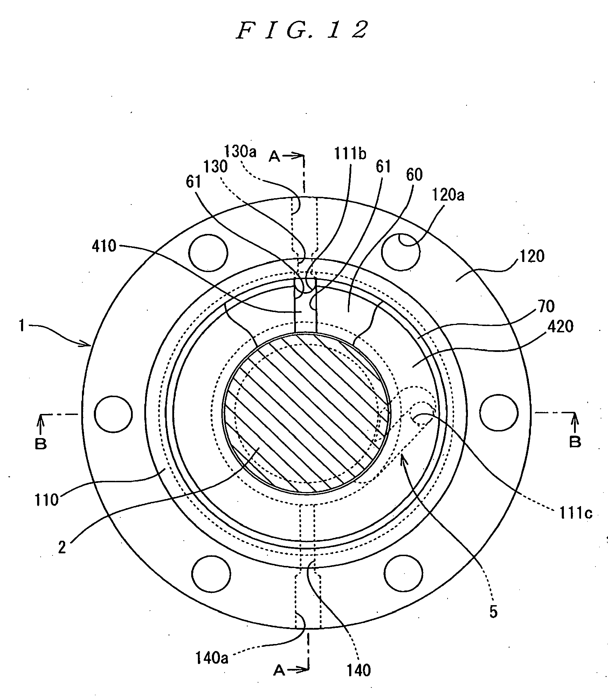

As shown in FIGS. 12 to 14, the ball screw has the nut 1, the screw shaft 2, balls 3, the ring-shaped non-contact seals 410 and 420, the end deflector 5, a disc-shaped support member 60, and a C-shaped retaining ring 70.. The spiral groove 1a is formed on the inner peripheral surface of the nut 1 and the spiral groove 2a is formed on the outer peripheral surface of the screw shaft 2. The balls 3 are disposed between the raceway formed by the spiral groove 1a of the nut 1 and the spiral groove 2a of the screw shaft 2.

As shown in FIGS. 12 to 15, the nut 1 has a cylinder 110, and the flange 120 integrally provided at the axial outside of the cylinder 110. The flange 120 is axial one end side of the cylinder 110 and is disposed at a position slightly sifted from the end face. The cylinder 110 is composed of a sub-part 111 where the spiral groove 1a formed, and seals 112 and 113 having an internal diameter greater than the sub-part 111 positioned at the both ends thereof. A vent hole 111b axially penetrating between the both end faces (an interface between the seals 112 and 113) 111a is formed in the sub-part 111 of the cylinder 110.

Additionally, a suction hole 130 connected to the suction section is formed in the nut 1. The suction hole 130 radially extends from the outer peripheral surface of the flange 120 to a vent hole 111b of the cylinder 110. The suction hole 130 is diametrically expanded at a boundary side with the cylinder 110 of the flange 120 and the large-diameter part functions as a fitting hole 130a into which a tip of the suction pipe is inserted for fitting thereof.

A grease supply hole 140 supplying lubricant inside the nut 1 is formed in the nut 1. The grease supply hole 140 has the same axial position as the suction hole 130, disposed at a position at the opposite side of the suction hole 130 seen from the radial direction, and radially penetrates from the outer peripheral surface of the flange 120 to the inner peripheral surface of the sub-part 111 of the cylinder 110. The grease supply hole 140 is diametrically expanded at an interface side with the cylinder 110 of the flange 120 and the large-diameter part functions as a fitting hole 140a into which a tip of the grease supply pipe is inserted for fitting thereof.

A fitting hole 120a fitting the nut 1 to the housing is formed in the flange 120 of the nut 1.

The ball return channel of the ball screw is composed of a ball return channel 111c formed by an axially extending through hole, and the end deflector 5 connected to the both ends thereof. The ball returning raceway 111c is formed at a position at which a central angle relative to the suction hole 130 is 90° in a circumferential direction. Further, a concave 111d into which the end deflector 5 is disposed is formed at a position of the both ends of the ball return channel 111c of the both end face 111a at the sub-part 111.

First grooves 112a and 113a and second grooves 112b and 113b for attaching seal are axially formed at intervals in order from the end face 111a of the sub-part 111 on the inner peripheral surface of the seals 112 and 113 of the cylinder 110 of the nut 1.

A first non-contact seal (inner seal) 410 is fitted to the first grooves 112a and 113a using a C-shaped retaining ring 70 having the end face 111a of the sub-part 111 as a supporting surface. The first non-contact seal 410 has a through hole 410a with the same diameter as a cross section of a vent hole 111b and is provided so as to fit to the vent hole 111b of the nut 1. An opening of the C-shaped retaining ring 70 is also arranged so as to fit to the vent hole 410a.

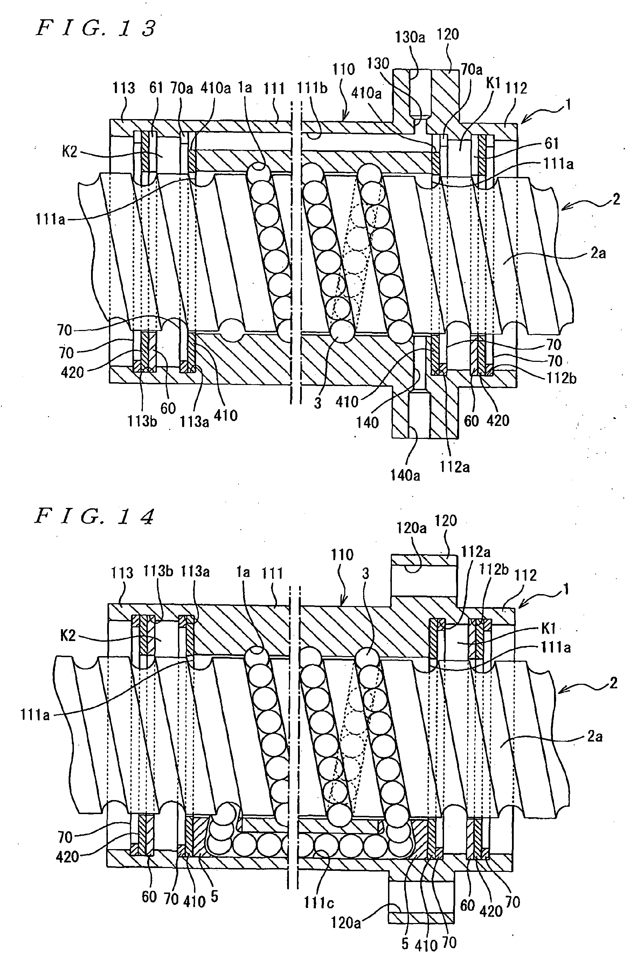

The disc-shaped supporting member 60, the second seal 420, and the C-shaped retaining ring 70 are arranged in order from the first grooves 112a and 113a side. Namely, the second non-contact seal 420 is fixed to the second grooves 112b and 113b with a disc surface of the disc-shaped supporting member 60 as a supporting surface using the C-shaped retaining ring 70. The disc-shaped retaining member 60 is a member where a center-notched section (see Fig. 12) having the width corresponding to the diameter of the vent hole 111b is circumferentially provided, at a disc having a hole of which inner diameter is the same as the non-contact seal 420. An end face 61 of the center-notched section is shown in FIG. 13.

Thereby, in the ball screw of the embodiment, two ring-shaped non-contact seals 410 and 420 are disposed through predetermined spaces K1 and K2 at the axial both ends of the nut 1. The these spaces K1 and K2 and the both ends of the through hole 111b are communicated respectively with the through hole 410a of the first non-contact seal 410.

Adopting the same first non-contact seal 410 and the second non-contact seal 420 at the axial both ends, and making the gap to the screw shaft 2 equal at the both ends attains the uniform amount of dust emission from the both ends, thereby realizing effective suction. The radial gap with respect to the screw shaft 2 of the first non-contact seal (inner seal) 410 is preferable to set about 0.1mm or so to reduce to the utmost a grease leak. On the other hand, the radial gap with respect to the screw shaft 2 of the second non-contact seal 420 is preferable to set to about 0.3mmm or so for achieving good sucking effect.

When using the ball screw, a tip of the grease supply pipe of the low-emission dust of which consistency is less than 300 is attached to the fitting hole 140a of the grease supply hole 140 of the nut 1 and a tip of the grease supply pipe is attached to the fitting hole 130a of the suction hole 130 of the nut 1.

Subsequently, the suction source of the suction pipe is activated to start an operation of the ball screw. This prevents the outside air from entering into the spaces K1 and K2 through the gap between the second non-contact seal 420 and the screw shaft 2, and from going toward the outside through the second non-contact seal 420 and the screw shaft 2. Air existing within the range of the raceway inside of the nut 1 goes toward the spaces K1 and K2 through the gap between the first non-contact seal 410 and the screw shaft 2. The air in the respective spaces K1 and K2 then enters into the vent hole 111b of the nut 1 through the through hole 410a of the first non-contact seal 410, being sucked and removed from the suction hole 130.

Thus, the dust standing within the nut 1 is effectively sucked and removed through the spaces K1 and K2. Since the both spaces K1 and K2 are connected via the vent hole 111b extending in an axial direction of the nut 1, it accomplishes higher removing efficiency of the dust inside of the nut 1 as compared with case where such vent hole 111b is not provided. Furthermore, the use of the non-contact seals 410 and 420 prevents dust emission spring from contact with the screw shaft 2.

Consequently, according to the ball screw of the present invention, the invention absorbs and removes almost all the dust produced inside the nut 1 without going toward the outside, while lubricating the ball screw by supplying lubricant to the inside of the nut, thus exerting dust emission effect higher than that of the conventional ball screw.

In the fourth embodiment, the two non-contact seals 410 and 420 are respectively disposed at the axial both ends of the nut 1. Instead, more than three non-contact seals may of course be disposed. In that instance, to effectively remove the dust by making the amount of dust emission from the axial both sides of the nut 1 uniform, disposing the same non-contact seals at the axial both ends of the nut 1 makes the gap to the screw shaft 2 equal at the both ends.

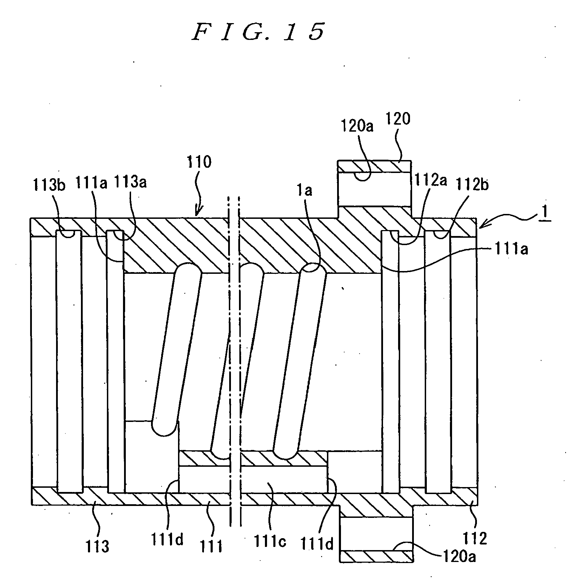

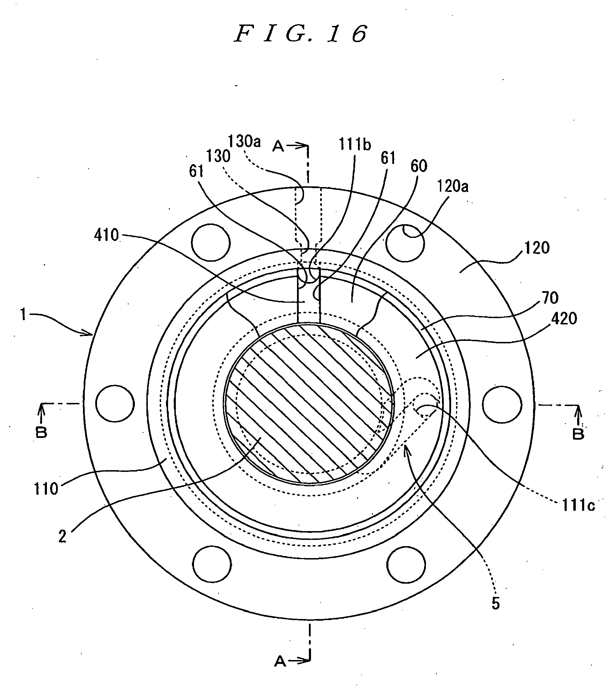

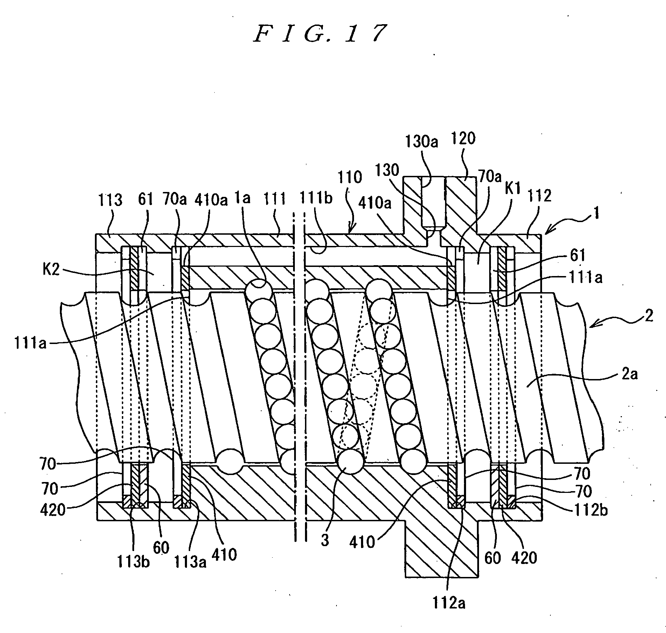

In the abovementioned fourth embodiment, the grease supply hole 140 is formed at the position different from that of the suction hole 130 of the nut 1 for supplying grease from the grease supply hole 140. Alternatively, lubrication may be performed by applying the grease plating to the screw shaft 2 without forming the grease supply hole 140, as shown in FIG. 16. FIG. 17 is a sectional view taken along the line A-A of FIG. 16. A sectional view taken along the line B-B shown in FIG. 16 is the same as that of FIG. 14. A sectional view taken along the line B-B of the nut 1 constituting the ball screw shown in FIG. 16 is the same as that of FIG. 15.

The lubrication of the ball screw shown in FIG. 16 is done by applying the grease plating and so the gap between the non-contact seals 410 and 410 is kept almost constant, thereby preventing invasion of the grease into the vent hole 111b. By contrast, in the ball screw shown in FIG. 12, it could not say no possibility that the grease supplied from the grease supply hole 140 might intrude into the suction hole 111b. In some instances, once the grease intrudes into the suction hole 111b, the ball screw can suffer from decreased suction effect. Consequently, the ball screw shown in FIG. 16 may exert dust reduction effect higher than that of the ball screw shown in FIG. 12.

In place of applying the grease plating to the screw shaft 2, the same effect as the above may be achieved by forming a film made of solid lubricant on a surface of the screw shaft 2. The solid lubricant for forming thereon the film includes at least one of molybdenum disulfide, organo molybdenum compounds, soft metal (e.g., gold, silver, and lead), and polymer materials (e.g., PTFE, polyimide).

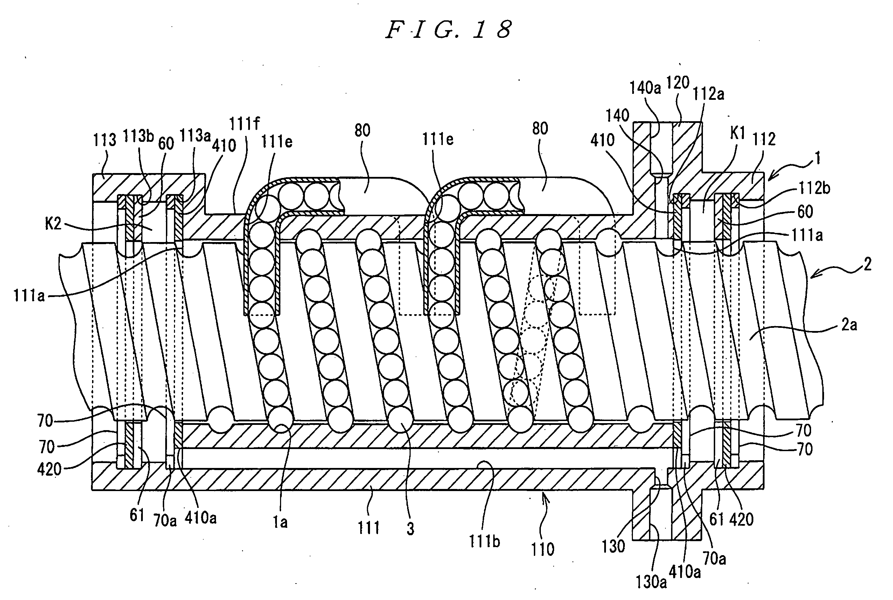

The ball screw shown in FIG. 18 is an example in which the ball return channel is made from the recirculating tube 80. In the ball screw shown in FIG. 18, the radially penetrating fitting hole 111e is formed at the sub-part 111 of the cylinder 110 of the nut 1. In lieu thereof, the concave 111d for disposing the ball return channel 111c and the end deflector 5 is not provided.

Moreover, a plane 111f for arranging the recirculating tube 80 is provided on the periphery of the sub-part 111. A leg of the recirculating tube 80 is inserted into the fitting hole 111e of the sub-part 111. Further, the recirculating tube 80 is fixed to the sub-part 111 with the tube retaining ring. The gap between the tube fitting hole 111e and the leg of the recirculating tube 80 is sealed using sealant. Thereby, in the ball screw shown in FIG. 18, the pathway through which the dust in the nut 1 exits outside is restricted to the axial both ends (existing only at the axial both ends of the nut 1) of the nut 1. Other than the above, the ball screw is the same as that shown in FIG. 12.

Accordingly, according to the ball screw shown in FIG. 1-18, almost all the dust produced within the nut is sucked and removed, without going toward the outside, while continuing lubrication of the ball screw by supplying lubricant inside the nut. This achieves the dust emission effect higher than that of the conventional ball screw,

### Reference Signs List

1: nut
1a: spiral groove of nut
1A: first nut
1B: second nut
10 double nut
11: flange
12: plane for disposing recirculating tube
13: through hole forming ball return channel
14: concave for seal fitting
14a: end face of concave 14
15: concave for end deflector fitting
16: tube fitting hole
17: housing
2: screw shaft
2a: spiral groove of screw shaft
3: balls
4: non-contact seal
41: non-contact seal
42: non-contact seal
46: grease pool space
5: end deflector
50: recirculating tube
6: spacer
7: suction hole
71: fitting portion
8: grease supply hole
81: fitting portion
9: spacer
110: cylinder of nut
111: channel of nut
111a: end face of nut
111b: vent hole
111c: ball return channel
111d: concave for end deflector fitting
111e: tube fitting hole
111f: plane for recirculating tube fitting
112: seal
112a: first groove
112b: second groove
120: flange
120a: fitting hole
130: suction hole
130a: fitting portion of suction hole
140: grease supply hole
140a: fitting portion of grease supply hole
410: first non-contact hole (inner seal)
410a: through hole
420: second non-contact hole
60: disc-shaped supporting member
61: end face of center-notched section
70: C-shaped retaining ring
70e: opening for C-shaped retaining ring
80: recirculating tube
K1, k2: space surrounded by two non-contact seals

## Claims

1. A ball screw, comprising:
a nut (1) on an inner peripheral surface of which a spiral groove (1a) is formed;
a screw shaft (2) on an outer peripheral surface of which a spiral groove (2a) is formed;
a plurality of balls (3) disposed in a raceway formed by the spiral groove (1 a) of the nut (1) and the spiral groove (2a) of the screw shaft (2); and
a ball return channel (111c, 80) returning back the plurality of balls (3) from an end point to a starting point of the raceway,
wherein the nut (1) relatively travels along the screw shaft (2) by rolling the plurality of balls (3) in the raceway,
**characterized in that**
a plurality of ring-shaped non-contact seals (410, 420) **is** disposed at a predetermined space (K1, K2) **at each of the axial ends** of the nut (1), **respectively,**
wherein a suction mechanism is provided for sucking **the** air within the **predetermined spaces (K1, K2),**
wherein the suction mechanism includes a suction hole (130) formed in the nut (1), an **axially penetrating** vent hole (111b) **formed in the nut (1),** and a through hole (410a) formed in an inside seal (410) **of each of the pluralities of ring-shaped non-contact seals (410, 420), said inside seals (410) being** disposed at the innermost of each **axial** end of the nut (1) **and there being a gap between each of said inside seals (410) and the screw shaft (2),**
**wherein each of said through holes (410a) communicates** the vent hole (111b) with one **of the predetermined spaces (K1, K2),**
wherein the suction hole (130) radially extends from an external surface of the nut (1) to the vent hole (111 b) and is disposed at a position between the inside seals (410) in an axial direction of the nut (1),
**wherein dust produced inside the nut (1) is sucked and removed from the suction hole (130) through the predetermined spaces (K1, K2) at the axial ends of the nut (1).**

2. The ball screw according to claim 1, wherein the ball return channel (111c) is formed within the nut (1).

3. The ball screw according to claim 1, wherein a grease supply hole (140) supplying grease within the nut is formed in the nut, and the suction hole (130) is formed at a position different from **the position of** the grease supply hole (140).

## Patentansprüche

1. Kugelgewindespindel, umfassend:
eine Mutter (1), auf deren innerer Umfangsoberfläche eine spiralförmige Nut (1a) ausgebildet ist;
eine Spindelwelle (2), auf deren äußere Umfangsoberfläche eine spiral-förmige Nut (2a) ausgebildet ist;
mehrere Kugeln (3), die in einer Laufbahn angeordnet sind, welche durch die spiralförmige Nut (1a) der Mutter (1) und die spiralförmige Nut (2a) der Spindelwelle (2) ausgebildet ist; und
einen Kugelrückführkanal (111c, 80), welcher die mehreren Kugeln (3) von einem Endpunkt zu einem Startpunkt der Laufbahn rückführt,
wobei sich die Mutter (1) entlang der Spindelwelle (2) durch Wälzen der mehreren Kugeln (3) in der Laufbahn relativ bewegt,
**dadurch gekennzeichnet, dass**
mehrere ringfiörmige berührungsfreie Dichtungen (410, 420) an einem vorbestimmten Raum (K1, K2) an jedem von den axialen Enden der Mutter (1) jeweils angeordnet ist,
wobei ein Saugmechanismus zum Saugen der Luft innerhalb der vorbestimmten Räume (K1, K2) vorgesehen ist,
wobei der Saugmechanismus eine Saugöffnung (130), die in der Mutter (1) ausgebildet ist, eine axial eindringende Luftöffnung (111b), die in der Mutter (1) ausgebildet ist, und eine Durchgangsöffnung (410a) enthält, die in einer von jeder der mehreren ringförmigen berührungsfreien Dichtungen (410, 420) ausgebildet ist, wobei die inneren Dichtungen (410) an dem Innersten von jedem axialen Ende der Mutter (1) angeordnet ist und ein Spalt zwischen jeder der inneren Dichtungen (410) und der Spindelwelle (2) vorliegt,
wobei jede der Durchgangsöffnungen (410a) die Luftöffnung (111b) mit einem der vorbestimmten Räume (K1, K2) verbindet,
wobei die Saugöffnung (130) sich radial von einer externen Oberfläche der Mutter (1) zu der Luftöffnung (111b) erstreckt und an einer Position zwischen den inneren Dichtungen (410) in einer Axialrichtung der Mutter (1) angeordnet ist,
wobei innerhalb der Mutter (1) erzeugter Staub von der Saugöffnung (130) durch die vorbestimmten Räume (K1, K2) an den axialen Enden der Mutter (1) gesaugt und entfernt wird.

2. Kugelgewindespindel nach Anspruch 1, wobei der Kugelrückführkanal (111c) innerhalb der Mutter (1) ausgebildet ist.

3. Kugelgewindespindel nach Anspruch 1, wobei eine Fettzufuhröffnung (140), welche Fett in die Mutter zuführt, in der Mutter ausgebildet ist, und die Saugöffnung (130) an einer Position ausgebildet ist, die sich von der Position der Fettzufuhröffnung (140) unterscheidet.

## Revendications

1. Une vis à billes, comprenant:
un écrou (1) sur une surface périphérique intérieure duquel est formée une rainure en spirale (1a),
une goupille de vis (2) sur une surface périphérique extérieure de laquelle est formée une rainure en spirale (2a),
une pluralité de billes (3) disposées dans un chemin de roulement formé par la rainure en spirale (1a) de l'écrou (1) et la rainure en spirale (2a) de la goupille de vis (2); et
un canal de retour de bille (111c, 80) renvoyant la pluralité de billes (3) d'un point final à un point de départ du chemin de roulement,
dans lequel l'écrou (1) se déplace relativement le long de la goupille de vis (2) en faisant rouler la pluralité de billes (3) dans le chemin de roulement,
**caractérisé en ce qu'**
une pluralité de joints d'étanchéité sans contact en forme d'anneau (410, 420) est disposée à un espace prédéterminé (K1, K2) à chacune des extrémités axiales de l'écrou (1), respectivement,
dans lequel un mécanisme d'aspiration est fourni pour aspirer l'air dans les espaces prédéterminés (K1, K2),
dans lequel le mécanisme d'aspiration comprend un trou d'aspiration (130) formé dans l'écrou (1), un trou d'évent perçant axialement (111 b) formé dans l'écrou (1), et un trou traversant (410a) formé dans un joint d'étanchéité intérieur (410) de chacune des pluralités de joints d'étanchéité sans contact en forme annulaire (410, 420), les joints d'étanchéité intérieurs (410) étant disposés à l'extrémité la plus à l'intérieur des extrémités axiales de l'écrou (1), et un espace étant fourni entre chacun des joints d'étanchéité intérieurs (410) et la goupille de vis (2),
dans laquelle chacun des trous traversant (410a) relie le trou d'évent (111b) avec un des espaces prédéterminés (K1, K2),
dans lequel le trou d'aspiration (130) s'étende radialement d'une surface extérieure de l'écrou (1) au trou d'évent (111b) et est disposé à une position entre les joints d'étanchéité intérieurs (410) dans une direction axiale de l'écrou (1),
dans lequel de la poussière produite à l'intérieur de l'écrou (1) est aspirée et enlevée du trou d'aspiration (130) à travers les espaces prédéterminés (K1, K2) aux extrémités axiales de l'écrou (1).

2. La vis à billes selon la revendication 1, dans laquelle le canal de retour de bille (111c) est formé à l'intérieur de l'écrou (1).

3. La vis à billes selon la revendication 1, dans laquelle un trou d'alimentation de lubrifiant (140) fournissant du lubrifiant à l'intérieur de l'écrou est formé dans l'écrou, et le trou d'aspiration (130) est formé à une position différente de la position du trou d'alimentation de graisse (140).
